# FASCICULE DE BREVET EUROPEEN

(11) **EP 1 630 351 B1**
(45) Date de publication et mention de la délivrance du brevet: **07.10.2015**
(21) Numéro de dépôt: 05291725.9
(22) Date de dépôt: 12.08.2005
(51) Int. Cl.: F01D 5/14

(54) **Aube de compresseur ou de turbine à gaz**
Schaufel eines Verdichters oder einer Gasturbine
Blade for a compressor or a gas turbine

(30) Priorité: 23.08.2004 FR 0409038
(43) Date de publication de la demande: 01.03.2006
(73) Titulaire: SNECMA, 75015 Paris (FR)
(72) Inventeur: Bil, Eric, 77590 Chartrettes (FR); Hervy, Nicolas, 91210 Draveil (FR); Schlesinger, Thomas, 92150 Suresnes (FR)
(74) Mandataire: Ramey, Daniel

(56) Documents cités:
- US-A- 835 473
- US-A- 4 365 933
- PATENT ABSTRACTS OF JAPAN vol. 1996, no. 04, 30 avril 1996 (1996-04-30) -& JP 07 332004 A (MITSUBISHI HEAVY IND LTD), 19 décembre 1995 (1995-12-19)

## Description

La présente invention concerne une aube de rotor ou de stator de compresseur ou de turbine à gaz, ainsi qu'un compresseur ou une turbine de turboréacteur comprenant une pluralité de ces aubes.

Une aube de compresseur ou de turbine à gaz comprend une pale définie par un extrados ou surface extérieure convexe et un intrados ou surface intérieure concave qui sont reliés à leurs extrémités amont par un bord d'attaque et à leurs extrémités aval par un bord de fuite des gaz. L'intrados et l'extrados se terminent sur une plate-forme qui peut être pourvue d'un pied d'aube du type en queue d'aronde ou en sapin destiné à être inséré dans une rainure correspondante d'un disque de rotor du compresseur ou de la turbine à gaz.

La plate-forme présente en général un becquet qui s'étend vers l'amont depuis le bord d'attaque et un becquet qui s'étend vers l'aval depuis le bord de fuite. Les becquets amont et aval des plates-formes des aubes servent, en coopération avec des éléments du stator du compresseur ou de la turbine à gaz, à limiter par effet de chicane le passage de gaz depuis l'intérieur du compresseur ou de la turbine radialement vers les intrados et extrados des aubes, et inversement depuis les intrados et extrados des aubes jusqu'à l'intérieur du compresseur ou de la turbine à gaz. Les becquets amont et aval ont donc une fonction importante qui a une influence directe sur les pertes de charge du compresseur ou de la turbine à gaz et donc de leur rendement.

En fonctionnement, les becquets aval des plates-formes des aubes, qui sont soumis à des températures élevées, se dilatent et se déforment par rapport aux pales, ce qui crée des contraintes élevées aux jonctions entre les pales et les plates-formes des aubes.

Ces contraintes sont susceptibles de fragiliser les aubes et de réduire leur durée de vie.

Le document US-A-4 365 933 décrit des aubes de turbine à gaz qui s'étendent radialement entre deux anneaux cylindriques, ces anneaux comportant des fentes de relâchement de contraintes s'étendant entre les aubes.

L'invention a notamment pour but d'apporter une solution simple, économique et efficace à ce problème.

Elle a pour objet une aube de rotor de compresseur ou de turbine à gaz dans laquelle on limite l'action de la dilatation et de la déformation du becquet aval sur la zone de raccordement de la pale à la plate-forme de l'aube.

Elle propose à cet effet une aube de rotor de compresseur ou de turbine à gaz, comprenant un extrados ou surface extérieure convexe et un intrados ou surface intérieure concave, reliés à leurs extrémités amont par un bord d'attaque et à leurs extrémités aval par un bord de fuite des gaz, et se terminant sur une plate-forme dont une partie comporte un becquet qui s'étend vers l'aval depuis le bord de fuite, caractérisée en ce que ledit becquet comprend au moins une entaille traversante qui s'étend sur toute son épaisseur ou dimension selon l'axe longitudinal de l'aube, depuis l'extrémité aval du becquet vers une ligne transversale passant par le bord de fuite.

L'entaille s'étend avantageusement jusqu'à la ligne transversale passant par le bord de fuite, depuis l'extrémité aval du becquet.

Cette entaille partage le becquet en deux parties latérales qui se dilatent et se déforment librement l'une par rapport à l'autre, ce qui réduit les contraintes au niveau de la zone de raccordement entre la pale et la plate-forme de l'aube.

Le nombre d'entailles est avantageusement de deux ou trois, et la taille, la forme et l'orientation de chaque entaille sont déterminées pour que le becquet ait une souplesse suffisante tout en conservant sa fonction principale d'étanchéité de la zone d'écoulement des gaz au niveau des intrados et extrados des aubes. La forme des entailles est par exemple sensiblement rectiligne.

Selon un mode de réalisation préféré de l'invention, l'entaille la plus proche du bord de fuite est sensiblement parallèle à l'extrémité aval de l'extrados, et la ou chaque entaille est sensiblement parallèle à la direction d'écoulement des gaz au droit de l'entaille. Les entailles sont alors divergentes les unes par rapport aux autres vers l'aval.

Comme elles sont orientées selon le profil aérodynamique de l'écoulement des gaz au niveau des extrados des aubes, elles perturbent peu l'écoulement des gaz entre les aubes et ne créent pas de pertes de charges ou de turbulences susceptibles de réduire le rendement du compresseur ou de la turbine à gaz.

Selon une autre caractéristique de l'invention, l'extrémité amont de chaque entaille comporte un orifice cylindrique traversant, d'un diamètre supérieur à la largeur de cette entaille.

Cet orifice permet de réduire et de répartir les contraintes locales à l'extrémité amont de l'entaille et évite le risque de fissures ou de criques à cette extrémité.

L'invention propose également une turbine, caractérisée en ce qu'elle comprend une pluralité d'aubes dont les becquets aval comprennent au moins une entaille traversante précitée.

Elle propose également un compresseur, équipé d'aubes du type précité.

L'invention concerne également une turbomachine, telle qu'un turboréacteur ou un turbopropulseur d'avion, caractérisée en ce qu'elle comprend une pluralité d'aubes du type précité.

D'autres avantages et caractéristiques de l'invention apparaîtront à la lecture de la description suivante faite à titre d'exemple non limitatif et en référence aux dessins annexés dans lesquels :
- la figure 1 est une vue schématique en perspective d'une aube selon l'invention, vue du dessous et du côté amont ;
- la figure 2 est une vue schématique en perspective de l'aube selon l'invention, vue du dessus et du côté aval ;
- la figure 3 est une vue schématique partielle agrandie et de dessus des entailles du becquet aval de cette aube.

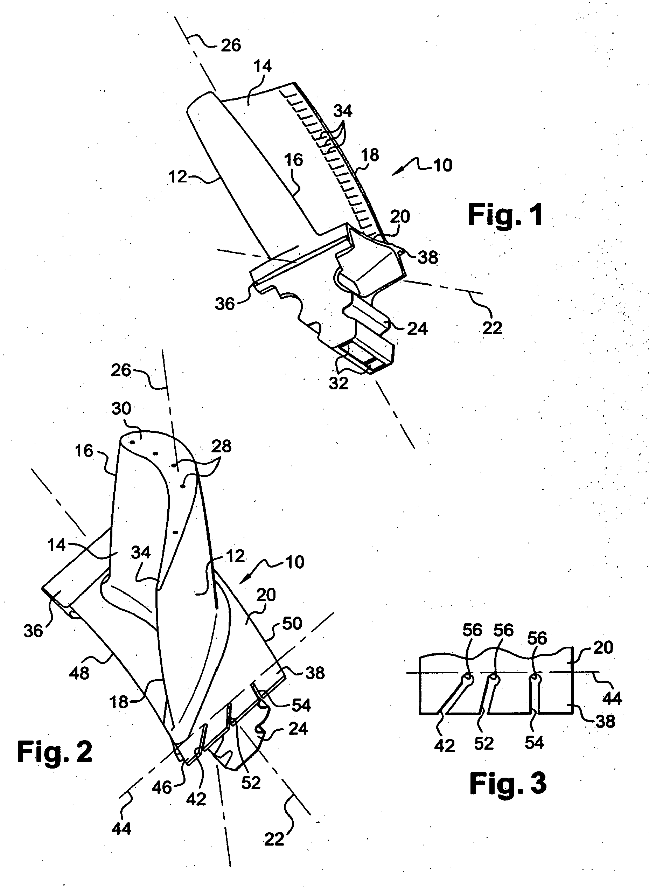

L'aube selon l'invention, représentée aux figures 1 et 2, est une aube de rotor d'un compresseur ou d'une turbine à gaz, en particulier d'un turboréacteur ou d'un turbopropulseur d'avion.

Cette aube 10 comprend un extrados 12 ou surface extérieure convexe et un intrados 14 ou surface intérieure concave qui sont reliés à leurs extrémités amont par un bord 16 d'attaque et à leurs extrémités aval par un bord 18 de fuite des gaz qui s'écoulent dans le compresseur ou la turbine à gaz.

L'aube 10 comprend en outre une plate-forme 20 sensiblement rectangulaire d'axe longitudinal 22, qui relie l'extrémité inférieure de l'intrados 14 et de l'extrados 12 à un pied 24 au moyen duquel l'aube 10 est montée sur un disque (non représenté) du rotor du compresseur ou de la turbine à gaz, par emmanchement de ce pied 24 dans une cavité de forme correspondante de la périphérie du disque de rotor.

Grâce à cet emmanchement mâle / femelle, qui est du type en sapin dans l'exemple représenté, l'aube 10 est retenue radialement sur le disque de rotor. D'autres moyens sont prévus pour bloquer axialement le pied 24 de l'aube 10 dans la cavité du disque.

Chaque disque de rotor comprend une pluralité d'aubes 10 réparties régulièrement sur sa périphérie externe et coopérant avec des étages d'aubes fixes de stator disposés entre deux disques de rotor.

L'aube 10 est ventilée intérieurement et refroidie au moyen de conduits s'étendant le long de l'axe longitudinal 26 de l'aube 10 et débouchant par des orifices 28 à l'extrémité 30 de l'aube 10 opposée au pied 24. Ces canaux sont alimentés par des orifices 32 du pied 24 de l'aube 10 et comportent également des fentes de sortie 34 formées sur une partie de l'intrados 14 proche du bord de fuite 18.

La plate-forme 20 s'étend vers l'amont et vers l'aval au-delà de l'extrados 12 et de l'intrados 14 et forme un becquet amont 36 et un becquet aval 38. Les becquets 36, 38 ont une orientation sensiblement circonférentielle sur le disque de rotor et coopèrent avec des éléments correspondants des étages d'aubes fixes pour limiter le passage des gaz depuis l'intérieur du compresseur ou de la turbine à gaz radialement vers les intrados 14 et extrados 12 des aubes 10, et inversement depuis les intrados 14 et extrados 12 des aubes 10 vers l'intérieur du compresseur ou de la turbine à gaz, afin de ne pas réduire le rendement de cette machine.

En fonctionnement, les aubes 10 des disques sont soumises à des forces centrifuges importantes et à des températures élevées en particulier quand il s'agit des aubes d'une turbine à gaz de turboréacteur qui reçoivent des gaz brûlés provenant d'une chambre de combustion en amont de la turbine. La dilatation thermique du becquet aval se traduit par une déformation du becquet par rapport à la pale, ce qui crée des contraintes élevées au niveau du raccordement de la pale à la plate-forme 20.

L'invention permet de limiter ces contraintes au moyen d'au moins une entaille traversante 42, qui est formée à travers toute l'épaisseur ou dimension du becquet aval 38 selon l'axe longitudinal 26 de l'aube 10, cette entaille 42 s'étendant sensiblement entre une ligne transversale 44 passant par le bord de fuite 18 et l'extrémité aval du becquet 38.

L'entaille 42 se trouve au voisinage de l'extrados 12 et est rectiligne et sensiblement parallèle à la partie de l'extrados qui rejoint le bord de fuite 18.

Grâce à cette entaille 42, seule la dilatation thermique de la partie 46 du becquet aval 38 qui se trouve entre l'entaille 42 et le bord 48 de la plate-forme 20 auquel se raccorde le bord de fuite 18, peut exercer une contrainte au niveau du raccordement de la pale sur la plateforme 20. La dilatation thermique de l'autre partie de becquet aval 38 comprise entre l'entaille 42 et le bord opposé 50 de la plate-forme 20 n'a pratiquement plus d'effet sur cette zone de raccordement.

Le nombre d'entailles du becquet aval peut être quelconque, par exemple de deux ou de trois comme représenté, les autres entailles 52, 54 s'étendant entre la ligne transversale 44 précitée et le bord du becquet aval 38 et étant sensiblement parallèles aux lignes d'écoulement de gaz au voisinage de l'extrados 12. Ces entailles 42, 52, 54 sont donc divergentes vers l'aval depuis la ligne 44.

Dans ces conditions, l'air de refroidissement qui circule sous les plates-formes 20 au niveau des pieds 24 des aubes 10, peut passer par les entailles 42, 52, 54 et se mêler sans trop le perturber à l'écoulement de gaz qui circule dans le compresseur ou la turbine.

Comme représenté en figure 3, l'extrémité amont de chaque entaille 42, 52, 54 est formée par un orifice cylindrique traversant 56, d'un diamètre supérieur à la largeur de cette entaille 42, 52, 54. Ceci permet de réduire les concentrations de contraintes aux extrémités amont des entailles 42, 52,54.

Les entailles 42, 52, 54 et les orifices 56 peuvent être réalisés par usinage ou par toute autre technique appropriée.

L'aube 10 selon l'invention est particulièrement mais non exclusivement destinée à un compresseur ou une turbine de turbomachine du type turbopropulseur ou turboréacteur.

## Revendications

1. Aube de rotor de compresseur ou de turbine à gaz, comprenant un extrados (12) ou surface extérieure convexe et un intrados (14) ou surface intérieure concave, reliés à leurs extrémités amont par un bord (16) d'attaque et à leurs extrémités aval par un bord (18) de fuite des gaz, et se terminant sur une plate-forme (20) comportant un becquet (38) qui s'étend vers l'aval depuis le bord de fuite (18), **caractérisée en ce que** ledit becquet (38) comprend au moins une entaille traversante (42, 52, 54), qui s'étend sur toute son épaisseur ou dimension selon l'axe longitudinal (26) de l'aube (10), depuis l'extrémité aval du becquet (38) vers une ligne transversale (44) passant par le bord de fuite (18).

2. Aube selon la revendication 1, **caractérisée en ce que** la ou chaque entaille (42, 52, 54) s'étend jusqu'à la ligne transversale passant par le bord de fuite (18), depuis l'extrémité aval du becquet (38).

3. Aube selon la revendication 1 ou 2, **caractérisée en ce que** la ou chaque entaille (42, 52, 54) a une forme sensiblement rectiligne.

4. Aube selon l'une des revendications précédentes, **caractérisée en ce que** les entailles (42, 52, 54) sont divergentes les unes par rapport aux autres vers l'aval.

5. Aube selon l'une quelconque des revendications précédentes, **caractérisée en ce que** l'entaille (42) la plus proche du bord de fuite (18) est sensiblement parallèle à l'extrémité aval de l'extrados (12).

6. Aube selon l'une quelconque des revendications précédentes, **caractérisée en ce que** la ou chaque entaille (42, 52, 54) est sensiblement parallèle à la direction d'écoulement des gaz au droit de l'entaille (42, 52, 54).

7. Aube selon l'une quelconque des revendications précédentes, **caractérisée en ce que** l'extrémité amont de chaque entaille (42, 52, 54) comporte un orifice cylindrique traversant (56), d'un diamètre supérieur à la largeur de cette entaille (42, 52, 54).

8. Aube selon la revendication 7, **caractérisée en ce que** les orifices (56) précités sont réalisés par usinage.

9. Aube selon l'une des revendications précédentes, **caractérisée en ce que** les entailles (42, 52, 54) sont réalisées par usinage.

10. Turbine de turbomachine, **caractérisée en ce qu'**elle comprend une pluralité daubes (10) selon l'une des revendications précédentes.

11. Compresseur de turbomachine, **caractérisé en ce qu'**il comprend une pluralité d'aubes (10) selon l'une des revendications 1 à 8.

12. Turbomachine, telle qu'un turboréacteur ou un turbopropulseur d'avion, **caractérisée en ce qu'**elle comprend une pluralité d'aubes selon l'une des revendications 1 à 8.

## Patentansprüche

1. Rotorschaufel für Kompressoren bzw. Gasturbinen, enthaltend eine Saugseite (12) oder konvexe Außenfläche und eine Druckseite (14) oder konkave Innenfläche, die an ihren vorderen Enden über eine Vorderkante (16) verbunden sind und an ihren hinteren Enden über eine Gasaustrittskante (18) verbunden sind und an einer Plattform (20) enden, die eine Schürze (38) aufweist, die sich von der Hinterkante (18) ausgehend in Richtung stromabwärts erstreckt, **dadurch gekennzeichnet, dass** die Schürze (38) zumindest eine durchgehende Einkerbung (42, 52, 54) aufweist, die sich über ihre gesamte Dicke bzw. Abmessung in der Längsachse (26) der Schaufel (10) von dem hinteren Ende der Schürze (38) ausgehend zu einer quer verlaufenden Linie (44) erstreckt, die durch die Hinterkante (18) verläuft.

2. Schaufel nach Anspruch 1, **dadurch gekennzeichnet, dass** die bzw. jede Einkerbung (42, 52, 54) sich von dem hinteren Ende der Schürze (38) ausgehend bis zur quer verlaufenden Linie erstreckt, die durch die Hinterkante (18) verläuft.

3. Schaufel nach Anspruch 1 oder 2, **dadurch gekennzeichnet, dass** die bzw. jede Einkerbung (42, 52, 54) eine im Wesentlichen geradlinige Form hat.

4. Schaufel nach einem der vorangehenden Ansprüche, **dadurch gekennzeichnet, dass** die Einkerbungen (42, 52, 54) in Richtung stromabwärts voneinander divergierend verlaufen.

5. Schaufel nach einem der vorangehenden Ansprüche, **dadurch gekennzeichnet, dass** die der Hinterkante (18) am nächsten liegende Einkerbung (42) im Wesentlichen parallel zum hinteren Ende der Saugseite (12) verläuft.

6. Schaufel nach einem der vorangehenden Ansprüche, **dadurch gekennzeichnet, dass** die bzw. jede Einkerbung (42, 52, 54) im Wesentlichen parallel zur Strömungsrichtung der Gase im Bereich der Einkerbung (42, 52, 54) verläuft.

7. Schaufel nach einem der vorangehenden Ansprüche, **dadurch gekennzeichnet, dass** das vordere Ende einer jeden Einkerbung (42, 52, 54) eine durchgehende, zylindrische Öffnung (56) mit einem Durchmesser größer als die Breite dieser Einkerbung (42, 52, 54) aufweist.

8. Schaufel nach Anspruch 7, **dadurch gekennzeichnet, dass** die vorgenannten Öffnungen (56) durch spanabhebende Bearbeitung hergestellt sind.

9. Schaufel nach einem der vorangehenden Ansprüche, **dadurch gekennzeichnet, dass** die Einkerbungen (42, 52, 54) durch spanabhebende Bearbeitung hergestellt sind.

10. Turbine für Turbomaschinen bzw. Turbotriebwerke, **dadurch gekennzeichnet, dass** sie eine Mehrzahl von Schaufeln (10) nach einem der vorangehenden Ansprüche aufweist.

11. Kompressor für Turbomaschinen bzw. Turbotriebwerke, **dadurch gekennzeichnet, dass** er eine Mehrzahl von Schaufeln (10) nach einem der Ansprüche 1 bis 8 aufweist.

12. Turbomaschine bzw. Turbotriebwerk, wie etwa Turbostrahltriebwerk oder Turbopropellertriebwerk für Flugzeuge, **dadurch gekennzeichnet, dass** sie bzw. es eine Mehrzahl von Schaufeln nach einem der Ansprüche 1 bis 8 aufweist.

## Claims

1. Gas turbine or compressor blade, comprising a convex outer surface (12) or suction side and a concave inner surface (14) or pressure side, these sides being joined at their upstream ends by a leading edge (16) and at their downstream ends by a trailing edge (18) for the gases and terminating on a platform (20), one part of which includes a fairing (38) that extends towards the downstream end from the trailing edge (18), **characterized in that** said fairing (38) includes at least one through-notch (42,52,54)that extends right through its thickness or dimension along the longitudinal axis (26) of the blade (10), from the downstream end of the fairing (38) towards a transverse line (44) passing through the trailing edge (18).

2. Blade according to Claim 1, **characterized in that** the or each notch (42, 52, 54) extends from the downstream end of the fairing (38) as far as the transverse line passing through the trailing edge (18).

3. Blade according to Claim 1 or 2, **characterized in that** the or each notch (42,52,54) has a substantially straight shape.

4. Blade according to any preceding Claims, **characterized in that** the notches (42,52,54) diverge from one another towards the downstream end.

5. Blade according to any preceding Claims, **characterized in that** the notch (42) closest to the trailing edge (18) is approximately parallel to the downstream end of the suction side (12).

6. Blade according to any preceding Claims, **characterized in that** the or each notch (42,52,54) is approximately parallel to the direction of gas flow in line with the notch (42,52,54).

7. Blade according to any preceding Claims, **characterized in that** the upstream end of each notch (42,52,54) includes a cylindrical through-hole (56) having a diameter greater than the width of this notch (42, 52, 54) .

8. Blade according to Claim 7, **characterized in that** the aforementioned holes (56) are produced by machining.

9. Blade according to any preceding Claims, **characterized in that** the notches (42,52,54) are produced by machining.

10. Turbomachine turbine, **characterized in that** it comprises a plurality of blades (10) according to any preceding Claims.

11. Turbomachine compressor, **characterized in that** it comprises a plurality of blades (10) according to Claims 1 to 8.

12. Turbomachine, such as an aircraft turbojet or turboprop engine, **characterized in that** it comprises a plurality of blades according to Claims 1 to 8.
